# EUROPEAN PATENT SPECIFICATION

(11) **EP 4 007 692 B1**
(45) Date of publication and mention of the grant of the patent: **11.10.2023**
(21) Application number: 20764767.8
(22) Date of filing: 03.08.2020
(51) Int. Cl.: B29C 70/04, B32B 27/34, B32B 27/08, B32B 27/20

(54) **MANUFACTURED ARTICLES CONSISTING OF THE COUPLING OF TWO POLYAMIDE-BASED PARTS, ONE OF WHICH FIBRE-REINFORCED, AND A PROCESS FOR THE PRODUCTION THEREOF**
HERGESTELLTE GEGENSTÄNDE, DIE AUS DER KOPPLUNG ZWEIER TEILE AUF POLYAMIDBASIS BESTEHEN, VON DENEN EINES FASERVERSTÄRKT IST, UND EIN VERFAHREN ZUR PRODUKTION DAVON
ARTICLES MANUFACTURÉS CONSTITUÉS PAR L'ACCOUPLEMENT DE DEUX PARTIES À BASE DE POLYAMIDE, DONT L'UNE EST RENFORCÉE PAR DES FIBRES ET LEUR PROCÉDÉ DE PRODUCTION

(30) Priority: 02.08.2019 IT 201900013803
(43) Date of publication of application: 08.06.2022
(73) Proprietor: Radici Partecipazioni S.p.A., 24121 Bergamo (IT); Politecnico di Milano, 20133 Milano (IT)
(72) Inventor: SPINI, Erico, 23017 MORBEGNO (IT); PEDUTO, Nicolangelo, 20131 MILANO (IT); FRASSINE, Roberto, 25128 BRESCIA (IT); ANDREONI, Arturo Angelo, 20125 MILANO (IT); DEVASINI, Chiara, 20134 MILANO (IT); CONTINO, Marco, 20010 CANEGRATE (IT)
(74) Representative: Palladino, Saverio Massimo
(86) International application number: PCT/IB2020/057312
(87) International publication number: WO 2021/024153

(56) References cited:
- EP-A2- 0 630 736
- FR-A5- 2 046 309

## Description

### FIELD OF THE INVENTION

The present invention relates to manufactured articles consisting of the coupling of at least two polyamide-based parts, one of which made of a polyamide, preferably loaded with a dispersed filler, and the other made of a polyamide reinforced with fibres in their turn made of polyamide. The invention also relates to processes for the production of these manufactured articles.

### STATE OF THE ART

The production of objects consisting of the coupling of two (or more) parts made of different polymer materials is widely known; the objects thus produced may be the most varied, from car parts to items of everyday use (e.g. toothbrushes). Various techniques are used for producing these objects, and they differ depending on the shape of the object to be produced or the geometric relationship between the different polymeric parts of which it is comprised. For example, if the object is comprised of overlapping parallel layers, of essentially uniform thickness, of the different polymers, the production technique may be lamination or co-lamination of pre-formed homogeneous layers, making them adhere by heat treatment, generally with the application of pressure. Vice versa, in the event the object consists of more complex shaped parts, possibly co-penetrating or intersecting with one another, the production generally takes place with the so-called overmolding technique (this technique, or variants thereof, are also known in the sector by the definitions hybrid moulding, back injection or others). Overmolding consists in introducing into a cavity of a mould one part (that may be pre-formed or thermoformed inside the mould, and that may be pre-heated or heated in the mould itself) which does not completely occupy said cavity, so as to leave an empty space around the part; subsequently, a molten polymer is injected into the cavity (process known in the state of the art as back-injection), which completely occupies the empty space of the cavity; after the solidification of the molten material, an object can be removed from the mould consisting of the coupling of two coupled polymer parts.

Objects produced as described above, if made of polymeric materials only, do not have however a high mechanical strength, especially if they are large.

To overcome the problem, it has been proposed to add reinforcement elements to at least one of the two coupled parts.

In general, these reinforcements are comprised of parallel fibres, interwoven fibres or actual fabrics made of materials known to have a high mechanical strength, in particular carbon fibres or glass fibres. At the JEC World 2019 trade fair, held in March 2019 in Villepinte (Paris), various types of prototypes of mechanical parts were shown, in particular car parts, such as rear parts of seats, bumpers, air bag housings and the like; in general, all these prototypes have parts that are flat or at most slightly shaped, made with polymers reinforced with carbon fibres or glass fibres (in some cases also with metal inserts), whereas the ribs are made by overmolding.

However, even parts made with these fibre-reinforced compounds are not free from problems or disadvantages.

In the first place, the chemical and/or physical compatibility between the fibres and the matrix may not be optimal; this can cause difficulties in the production of fibre-reinforced part and require the addition of compounds to make them compatible.

Another disadvantage of traditional fibre-reinforced parts, when they comprise glass fibre, is a relatively high total weight; this characteristic is undesirable particularly in the case of car parts, given the constant search of this industry for methods and materials that can reduce the total weight of vehicles in order to reduce the consumptions thereof. EP 0 630 736 A2 discloses a process for the production of an article comprising the steps of: providing at least one part of a fiber-reinforced composite material, consisting of fibers of a polyamide in a matrix of a polyamide, in which the polyamide of the fibers has a higher melting point than the polyamide of the matrix; arranging said part of composite fiber-reinforced material inside the cavity of a mold, said cavity having a shape and/or size such as not to be completely occupied by said part; preheating said part of fiber-reinforced composite material into the mold and allowing the molten polyamide to solidify.

The aim of the present invention is that of providing manufactured articles consisting of the coupling of at least two polymer-based parts, one of which made of a polyamide matrix, preferably loaded with a dispersed filler, and the other made of a polyamide matrix reinforced with fibres in their turn made of polyamide, as well as to provide a process for producing these manufactured articles.

### SUMMARY OF THE INVENTION

In a first aspect thereof, the invention relates to a manufactured article consisting of the coupling of at least two polyamide-based parts, one of which made of a polyamide matrix, preferably loaded with a filler dispersed in the matrix, and the other made of a polyamide reinforced with fibres in their turn made of polyamide. Preferably, in the event in which the manufactured article consists of overlapping layers of the different parts, there are at least two parts present therein made of polyamide reinforced with polyamide fibres arranged on the outer faces of the manufactured article, whereas at least a part made of polyamide, preferably loaded with a filler dispersed in the matrix, forms one or more internal layers of the manufacture article itself.

In the second aspect thereof, the invention relates to a process for the production of manufactured articles formed by at least two different possibly mutually co-penetrating polyamide parts, of which at least one made of polyamide preferably loaded with a dispersed filler and at least one made of polyamide reinforced with polyamide fibres, which comprises the steps of:
a) providing at least one part of a fibre-reinforced composite material, consisting of fibres of a polyamide A in a matrix of a polyamide B, wherein the polyamide A has a higher melting point than the polyamide B;
b) arranging said part of fibre-reinforced composite material inside the cavity of a mould, said cavity having a shape and/or size so as not to be completely occupied by said part;
c) pre-heating and possibly thermoforming in the mould said part of fibre-reinforced composite material;
d) injecting a molten polyamide C, either not containing a filler or loaded with a dispersed filler, into the space of said cavity not occupied by said part;
e) allowing the molten polyamide C to solidify, forming a non-fibre-reinforced part and extracting the manufactured article from the mould,
wherein steps b) and c) can be performed in any chronological order.

### BRIEF DESCRIPTION OF THE DRAWINGS

- Fig. 1 shows a manufactured article of the invention in which the different parts are arranged in a structure with overlapping layers;
- Fig. 2 shows an exploded view of a manufactured article of the invention wherein the different parts are not arranged in a structure with overlapping layers, but they intersect; in particular, the manufactured article exemplified in the figure is a bar with ribs, which can substitute metal reinforcement parts;
- Fig. 3 shows a sectional view of the complete manufactured article of Fig. 2;
- Fig. 4 shows a frame for making samples of the fibre-reinforced part of composites of the invention;
- Fig. 5 shows the instrument for performing mechanical resistance tests (three-point bending test) with a mounted sample;
- Figures 6 and 7 show the results of the performance of the three-point bending tests on a sample of the invention and on a comparative sample, respectively;
- Fig. 8 shows force/displacement curves in three-point bending tests for a sample of the invention and a comparative sample.

### DETAILED DESCRIPTION OF THE INVENTION

In the present invention, the following terms and abbreviations have the meanings specified here:
- PA6: a polyamide produced by polymerization of the ε-caprolactam monomer;
- PA4.6: a polyamide produced starting from the monomers 1,4-diaminobutane and adipic acid (hexanedioic acid);
- PA6.6: a polyamide produced starting from the monomers 1,6-diaminobutane (commonly indicated as hexamethylene diamine) and adipic acid;
- PA6.10: a polyamide produced starting from the monomers hexamethylene diamine and sebacic acid (decanedioic acid);
- PA6.12: a polyamide produced starting from the monomers hexamethylene diamine and sebacic acid (dodecanedioic acid);
- PA11: a polyamide produced by the polymerization of the monomer 11-aminoundecandioic acid;
- PA12: a polyamide produced by the polymerization of the monomer 12-aminododecandioic acid in open form (compound known as ω-aminolauric acid) or cyclic form (laurolactam)
- PPA: polyphthalamide;
- "continuous fibre" or "continuous fibres" mean fibres that extend for the whole length of a fibre-reinforced part, in at least one of the lateral dimensions of said part, or a non-woven fabric having this dimensional characteristic;
- "short fibre" or "short fibres" mean a material in fibre form used as a filler of a non-fibre-reinforced part, and having a shorter length than the length of said part in any lateral dimension thereof;
- "overmolding" also means the variants of hybrid moulding and back injection.

In the following description, the polyamides indicated as A, B and C may be co-polyamides, as long as the relative melting point conditions described are respected.

In a first aspect thereof, the invention relates to manufactured articles obtained by coupling at least two (or more) parts formed by composite materials, comprising a polyamide matrix and polyamide fibres in the case of the fibre-reinforced part, and a part made of polyamide, preferably loaded with organic or inorganic fillers dispersed in a polyamide matrix, in the case of the non-fibre-reinforced part.

In the fibre-reinforced part, the polyamide of the matrix, B, has a melting point T lower than that of the fibres, A; this condition can be obtained in different ways. For example, the polyamides A and B may be different; alternatively, the polyamides A and B may be nominally the same (e.g. both polyamides PA6.6), but be used in different crystalline forms having different melting points; still further, the polyamides A and B may be nominally the same but with a different molecular weight, again having different melting points; other ways of realizing the desired condition of having two polyamides with two different melting temperatures will be evident to the experts in the polymer field.

This part may be formed by aligned (parallel) fibres only, or by fibres interwoven to form fabrics. An alternative possibility is to form this part with a non-woven fabric: in this case, the individual fibres generally do not have a length equal to at least one of the lateral dimensions of the fibre-reinforced part, but are interwoven with one another so as to form a single element having the required characteristic. The fibres are embedded in the polyamide matrix. A structure of this type, with fibres immersed in a continuous phase (matrix) can be produced according to various methods.

A first possibility is to prepare a set of fibres in contact with one another and to bring them for a short time to the melting point: in this way, for kinetic reasons only the surface part of the fibres melts, which re-solidifying forms the matrix. This technique can also be adopted with two-component fibres, comprising an inner part ("core") and an outer one ("shell") made with different polyamides, in which the outer part is made with a polyamide B having a lower melting point than the polyamide A of the core; fibres of this type can be obtained by co-extrusion. Alternatively, the fibres can have a "core-shell" structure as described above, but obtained starting from a single polyamide in two different crystalline forms or with different molecular weights, so that again the outer crystalline form is characterized by a lower melting point than that of the core. Finally, for this first possible embodiment fibres known as "commingled yarns" can be used, i.e. multi-filament fibres, in which at least one filament is comprised of the polyamide A having a higher melting point (e.g. PA6.6), which in the final manufactured article will constitute the reinforcement fibre, and at least one filament is comprised of a polyamide B having a lower melting point (e.g. PA6), intended to melt and form the matrix. Commingled yarn type fibres are well known in the textile sector, and may be comprised of at least two, but generally more, filaments, interwoven according to many possible different patterns.

The most convenient technique consists in arranging the fibres in a mould, superposing with them (preferably above and below the fibres) sheets or a particulate (e.g. shavings, granules or powder) of the material of the matrix, and bringing the system to the melting point of the polyamide B of the matrix under compression: the polyamide B melts and diffuses among the fibres also due to the pressure applied. By operating according to this last technique flat parts are generally obtained, with thicknesses generally between 0.2 and 3 mm, but it is also possible to obtain higher or lower thicknesses. This process can also be made continuous or semi-continuous, with a procedure similar to calendering, wherein the material intended to constitute the matrix (in the form of powder, film, etc.) and the reinforcing fibres or fabric are passed through rotating and heated cylinders, applying a pressure to impregnate the fibres with the molten matrix material (the instrument is called a belt press); alternatively, in the event of using core-shell or commingled yarn fibres, they are passed alone between rotating and heated cylinders. In case the resulting material is not perfectly consolidated after one passage only in the belt press, a second definitive consolidation passage in a compression moulding press can be performed. Other possible techniques are pultrusion and filament-winding or other similar technologies or that derive from them, well known to experts in the sector of producing thermoplastic composites.

To form the fibre-reinforced part, as mentioned, the polyamide of the matrix must have a lower melting temperature than that of the fibres. The melting temperature (or ranges of temperature) of the different polyamides are known to people skilled in the art; the following table shows some examples of possible matrix-fibre couples that can be used in the present invention:

| Matrix (polyamide B) | | Fibres (polyamide A) | |
|---|---|---|---|
| Type of polyamide | Melting point (°C) | Type of polyamide | Melting point (°C) |
| PA4.6 | 285-290 | PPA | 290-330 |
| PA6.6 | 255-265 | PA4.6 | 285-290 |
| PA6 | 210-225 | PA6.6 | 255-265 |
| PA6.10; PA6.12 | 215-210 | PA6 | 210-225 |
| PA11; PA12 | 185-175 | | |

Particular examples of composite materials for forming the fibre-reinforced part are those with one-directional fibres comprising a matrix of PA6 or co-polyamide PA6/PA6.6 (80-20) and fibres with high tenacity in PA6.6, or those comprising a matrix of PA6 and fabrics of fibre with high tenacity in PA6.6.

The fibre-reinforced part may also be a hybrid fibre-reinforced part, comprising a part reinforced with polyamide fibres according to the invention coupled to a traditional type part, reinforced with glass fibres, carbon fibres or the like, separate or in the form of fabric. In this case the matrix of the two fibre-reinforced parts is preferably realized with the same polyamide B. The coupling of these two fibre-reinforced parts can take place with the same production technologies as a single fibre-reinforced part, therefore in a belt press or static press or similar technologies. The hybrid fibre-reinforced part thus obtained can then be used in the overmolding process of the invention.

The non-fibre-reinforced part comprises a matrix in turn made of polyamide C (e.g. one of those described above) inside which, preferably, a discontinuous phase is dispersed, comprising fillers like glass fibre, carbon fibre, mineral powders or organic fillers.

In the case of fibres, they generally have a diameter in the range between about 5 and about 20 µm, and initial lengths generally less than 5 mm; in the composite formation operations, these fibres generally break (in particular the glass ones) giving rise to a filler with an equal diameter and lengths comprised between about 50 and 300 µm.

In the case of mineral loads, powders with particle size of less than 50 µm, and preferably between 2 and 50 µm, are generally used; the shape of these powders varies substantially according to the mineral, and can essentially be cubic or spheroidal (i.e. with three similar dimensions in space) in the case for example of calcium carbonate, or in the form of thin sheets for some minerals such as clay or mica.

Another possible material to be used as a filler is graphene, generally in the form of "thin sheets" having a thickness between 2 and 4 nm and lateral dimensions of about 10 µm.

The quantity of filler can vary between about 15% and 40% of the weight of the part in the case of carbon or mineral fillers, and between about 15% and 60% in the case of glass fibres. In the case of graphene, the quantity of filler is preferably less than 15%.

The manufactured articles of the invention, consisting of the coupling of at least one fibre-reinforced part and at least one non-fibre-reinforced part as discussed above, can have any shape and the geometric relationship between the two parts may be any.

The most common cases are manufactured articles comprising at least two overlapping layers of different polyamide parts, or manufactured articles comprising at least two different polyamide parts in a complex geometric relationship with each other.

In the case of manufactured articles comprising overlapping layers, the final manufactured article may be planar or, more commonly, shaped, with the parts that form the two layers extending in parallel for the entire extension of the manufactured article. In the automotive industry, parts such as the internal panels of doors or panels for batteries can be produced in this way.

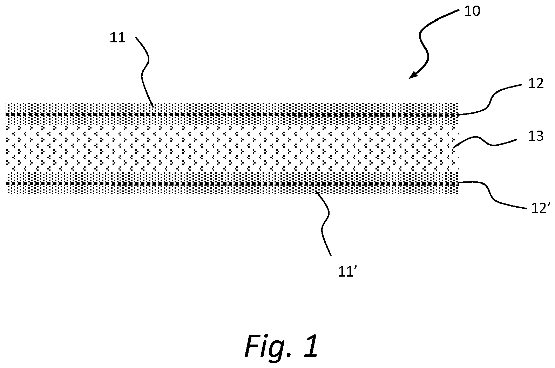

Preferably, manufactured articles comprising overlapping layers are formed by at least three layers, with the two external layers made of fibre-reinforced composite and the central layer made with the composite loaded with filler but not fibre-reinforced. This preferred structure is depicted in a sectional view in Figure 1: the manufactured article, 10, is comprised of two outer parts 11 and 11' of fibre-reinforced polyamide, containing the layers of fibres 12 and 12', respectively; part 13 is comprised between the two parts 11 and 11', made of polyamide loaded with a filler but not fibre-reinforced. Other structures of the arrangement of layers, with various internal layers, are also possible, but the two outer layers are always preferably comprised of fibre-reinforced parts.

In the case of manufactured articles with parts not simply overlapping, they may have any geometric relationship with one another; for example, one of the two parts may completely or almost completely surround the other, also with different thicknesses in different points of the surface, or let the more internal part emerge in some points of the surface of the final manufactured article; the central part can have through openings, which are occupied by the most external part, so that in those areas of the manufactured article the composite of the most internal part surrounds the composite of the external part; or any other shape and/or geometric relationship. In this second possibility (complex shapes and geometric relationships between the parts), if the fibre-reinforced part is internal it essentially exercises a "skeleton" function of the manufactured article, i.e. it imparts to the article mechanical resistance leaving outside a part with desired characteristics, such as the appearance or pleasantness to touch; if, instead, the fibre-reinforced part is external it has essentially the function of protecting the internal one from mechanical stress and strain, in particular from impact.

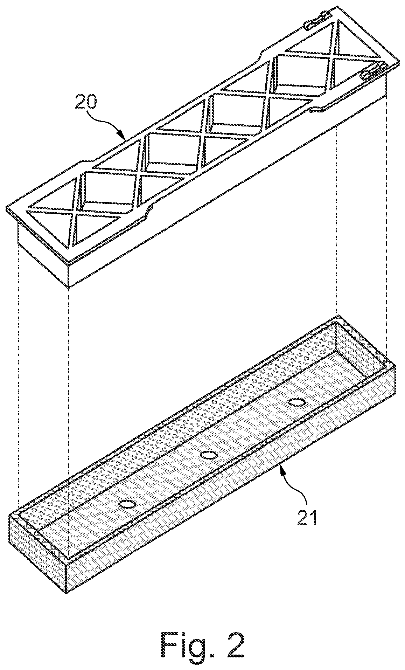

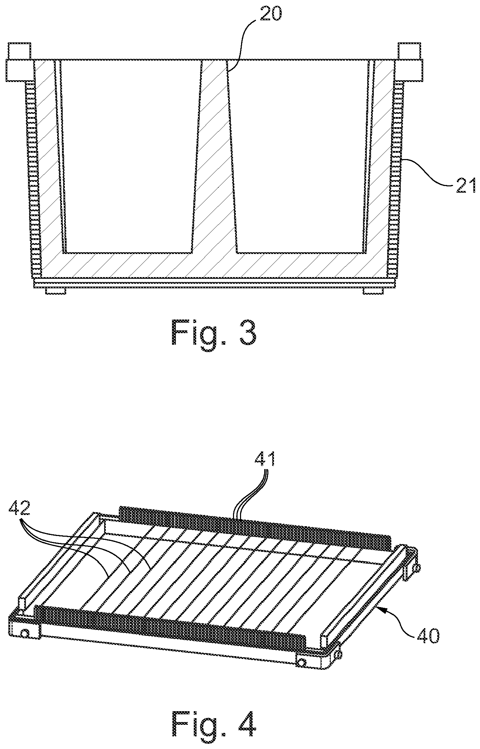

An example of this second type of manufactured article of the invention is shown in Figures 2 and 3 which represent the manufactured article in an exploded view and in a sectional view, respectively. In particular, Fig. 2 shows separately the non-fibre-reinforced part 20 and the fibre-reinforced part 21; the part 21 is produced separately and inserted into the mould in which the part 20 is then produced by injection, through overmolding, in the form of a hollow bar with ribs that maintains the dimensional and shape stability, also torsional, of the complete manufactured article. Figure 3 instead shows a sectional view of the complete manufactured article of the invention.

Figure 4 shows a possible frame for producing fibre-reinforced parts that can be used for producing the manufactured articles of the invention (both of the layer type, as in Fig. 1, and of the type illustrated in Figs. 2 and 3). The frame 40, is formed by four metal rods connected together to form a cornice. "Teeth" 41 are fixed on the upper surface of the two longest metal rods; polyamide filaments 42 are fixed to the teeth 41, which are to constitute the reinforcement fibres of the fibre-reinforced part. The teeth 41 are generally fine and very dense, with a thickness no greater than a millimetre and generally spaced out by no more than a millimetre, to guarantee a sufficient density of fibres in the fibre-reinforced part. The frame shown in Fig. 4 is adapted to produce parts with one-directional reinforcement, i.e. with parallel reinforcement fibres; for the production of fibre-reinforced parts with fibres in two mutually orthogonal directions, possibly interwoven, an analogous frame to that of Fig. 4 is used, but with teeth on all four sides of the frame, so as to be able to stretch the two series of orthogonal fibres.

In its second aspect the invention relates to the process for producing the manufactured articles described above.

The process is generally of the overmolding type, and comprises the steps of:
a) providing at least one part of a fibre-reinforced composite material, consisting of fibres of a polyamide A in a matrix of a polyamide B, wherein the polyamide A has a higher melting point than that of the polyamide B;
b) arranging said part of fibre-reinforced composite material inside the cavity of a mould, said cavity having shape and/or size so as not to be completely occupied by said part, said part being heated before its insertion into the mould or inside the mould;
c) pre-heating and possibly thermoforming in the mould said part of fibre-reinforced composite material;
d) injecting a molten polyamide C preferably loaded with a dispersed filler into the space of said cavity not occupied by said part of fibre-reinforced composite material;
e) letting the molten polyamide solidify and removing the manufactured article from the mould.

Steps b) and c) can be performed according to any method and sequence; the part in fibre-reinforced composite material can already have the final shape before insertion into the mould, or be thermoformed inside the mould itself; furthermore, it can be inserted pre-heated into the mould or be inserted cold and heated in the mould (even when thermoforming *in situ* is not envisaged). The possible pre-heating of the part made of fibre-reinforced composite material can be performed in any way, for example with an IR lamp or with hot air.

Step a) consists of the production of the fibre-reinforced part, and has already been described.

Steps b) to e) are the normal steps of an overmolding process, and are known to a person skilled in the art. In the present case, they are applied to the production of manufactured articles comprising parts made with the specific composite materials of the invention.

The invention will be further described by the following experimental part, including the description of the methods of performing the characterization tests, and the examples of production of the various articles manufactured according to the invention and measurement of their properties.

### Methods and instrumentation

### Instrumentation used for producing fibre-reinforced laminates and laminas:

- Mazzali oven, Thermair model;
- frame, shown in Fig. 4, comprising 4 aluminium rods connected to the ends with screws, forming a 350 x 350 mm cornice. The rods, along the upper perimeter, were perforated to allow the insertion of combs (pitch of about 1 mm) also made of metal (a resin was used to glue the combs into the space obtained in the upper perimeter of the rods);
- belt press;
- Sumitomo Demag injection moulding press.

### Instrumentation used for the mechanical characterization:

- Instron dynamometer mod. 5967 for three-point bending tests.

### EXAMPLE 1

This example relates to the preparation of a part made of fibre-reinforced composite.

The following are used as starting materials:
- a 0/90° type 330 g/m² fabric 2/2 twill made with 5.5 yarns/cm (both in warp and weft) of PA6.6 fibres with high tenacity of 2820 dtex;
- a sheet of PA6 with melting point 220-225 °C of thickness 150 µm for the matrix.

The sheet of PA6 and the PA6.6 fabric are alternated on five layers, according to the order: PA6 sheet - PA6.6 fabric - PA6 sheet - PA6.6 fabric - PA6 sheet.

The assembly comprised of these five layers is fed to a belt press, comprising a heating module and a cooling module; inside the press there are cylindrical rollers that can apply a maximum pressure up to 10 kg/cm²; the passage into these modules takes place in a time comprised between 3-6 minutes, and during the process a maximum T of 245 °C is reached.

A fibre-reinforced laminate of thickness 1.8-2 mm is obtained, wherein 57% of the volume is occupied by the fibre.

### EXAMPLE 2

This example relates to the preparation of a manufactured article of the invention, having the shape shown in Figures 2 and 3.

As a polyamide for realizing the non-fibre-reinforced part (polyamide C according to the present invention) a PA 66 for injection moulding loaded 30% by weight with fillers is used. The percentage is comprised of a part of glass fibre and a part of mineral filler. The formulation of this polyamide is developed by RadiciGroup High Performance Polymers, and consists of PA6.6 having a melting point in the range 260-290 °C, loaded with 23% by weight of glass fibres having a diameter between 5 and 20 µm, and 7% by weight of a mineral filler essentially comprising talc with an average particle size of 30 µm.

A lamina of the fibre-reinforced part prepared in Example 1 of dimensions 48 mm x 244 mm is cut, it is positioned inside the cavity of the mould (female part of the mould) and fixed to the most internal wall of the mould with high temperature resistant biadhesive tape. Then the hot air heating system is moved manually towards the lamina, so as only to reach a partial melting of the PA 6 matrix on the surface of the lamina. Then the mould is closed (having the male part shaped so as to obtain the ribs of the non-fibre-reinforced part shown in Fig. 2) and polyamide loaded with dispersed filler is injected into the part of the mould not occupied by the fibre-reinforced lamina. A moulding temperature between 280 and 300°C is used, according to the injection moulding indications for a loaded PA 6.6. The molten polyamide C is allowed to solidify. The adhesion mainly takes place due to the pre-heating of the lamina, the pressure exerted during the closure of the mould and the injection phase, and the contribution of the heat made by the polyamide back-injected in the molten state. The manufactured article with the following dimensions is removed:
- maximum length (including the upper wings shown in Fig. 2): 258 mm;
- body length (excluding the upper wings shown in Fig. 2): 244 mm;
- maximum width (including the upper wings shown in Fig. 2): 58 mm;
- body width (excluding the upper wings shown in Fig. 2): 48 mm;
- external height: 30 mm;
- internal cavity depth: 27 mm.

This manufactured article, which constitutes Sample 1, is comprised of a fibre-reinforced part positioned on the long side of the manufactured article (the wall thickness is 3 mm, therefore the lamina occupies about 2/3 of the wall, whereas the remaining 1 mm of thickness is occupied by the back-injected PA 66), mainly oriented outside, and the remaining part in back-injected polyamide 66, in the ribs, the short and the lateral sides.

### (COMPARATIVE) EXAMPLE 3

Using the same mould used in Example 2, a manufactured article is produced which has the same shape and size as Sample 1, but exclusively made with the polyamide C used in Example 2; this polyamide in this example therefore occupies the entire volume of the mould. The manufactured article obtained constitutes Sample 2.

### EXAMPLE 4

This example relates to the mechanical characterization of the Samples 1 and 2 with three-point bending tests.

Before being subjected to the tests illustrated below, the Samples were dried for 12 hours at 70-80 °C.

The three-point bending test consists of positioning a sample on two supports while applying the load at the centre. In this way tension is generated on the lower face and compression on the upper face and the sample deflects downwards.

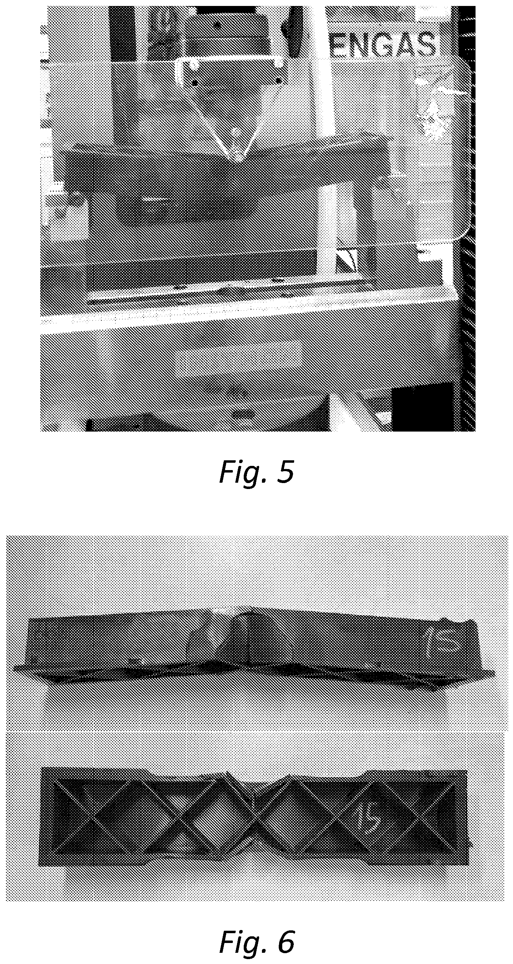

The tests are performed with the instrument Instron 5967, with Samples 1 and 2 positioned in the machine with the cavity facing upwards, as shown in Fig. 5. The test parameters adopted are:
- test speed 2 mm/min;
- distance between supports 230 mm.

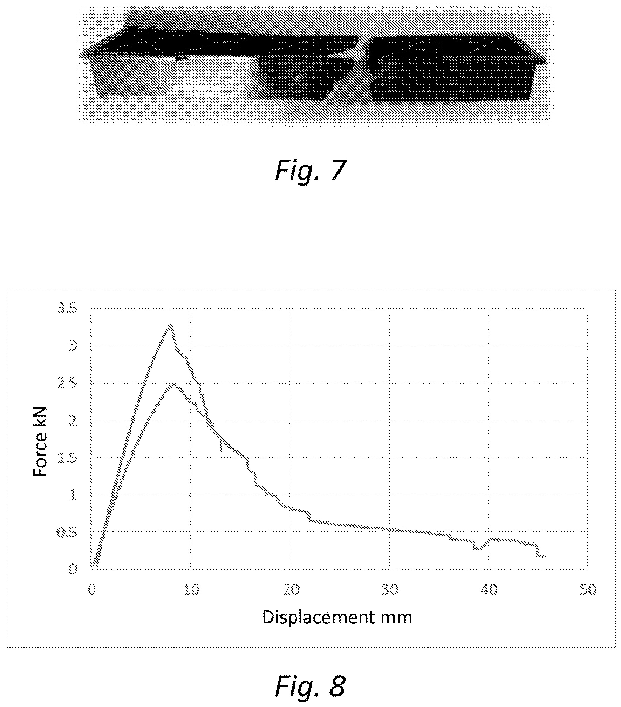

The results of the tests are shown in Fig. 6 and 7, respectively for Sample 1 and for Sample 2: as can be seen in the figures, following the test, Sample 1 undergoes a deformation but does not break, whereas Sample 2 breaks into two parts.

The load/displacement curves for the two samples are shown in Fig. 8.

From the graph in Fig. 8 it can be noted that the residual strength is increased if the fibre-reinforced part is present. In fact, the load-displacement curve, in the case of Sample 2 (comparison; highest curve in the figure), shows a drastic reduction in the load with a maximum displacement reached of around 13 mm after which the component breaks into two separate pieces. Sample 1 of the invention instead shows a very different trend of the curve (lowest curve in the figure); the displacement reaches over 45 mm without the piece breaking, then the test is interrupted as the load is almost null by then.

The mitigating effect of the polyamide fibres on the otherwise fragile breaking of the non-reinforced layer is to be noted. This prevents dispersion of the scraps of material following the fragile break. The effect is also to keep the polyamide fibres intact, thanks to their ductility, after the fragile break of the non-fibre-reinforced part, unlike what happens in the case of using reinforced parts with classic fragile fibres, in the first place carbon fibres or even glass fibres.

## Claims

1. Process for the production of a manufactured article consisting of the coupling of at least two polyamide-based parts, one of which made of a polyamide matrix optionally loaded with a filler dispersed in the matrix, and the other made of a polyamide matrix reinforced with fibres in their turn made of polyamide, comprising the steps of:
a) arranging at least one part (21) of a fibre-reinforced composite material, comprising fibres of a polyamide A in a matrix of a polyamide B, or fibres and a matrix of the same polyamide in two different crystalline forms A and B, or fibres (12) and a matrix of the same polyamide in two forms A and B with different molecular weights, wherein the polyamide A of the fibres has a higher melting point than the polyamide B of the matrix;
b) arranging said part (21) of fibre-reinforced composite material inside the cavity of a mould, said cavity having shape and/or size so as not to be completely occupied by said part;
c) pre-heating and possibly thermoforming in the mould said part of fibre-reinforced composite material;
d) injecting a molten polyamide C optionally loaded with a dispersed filler into the space of said cavity not occupied by said part of fibre-reinforced composite material;
e) allowing the molten polyamide C to solidify, to form a non-fibre-reinforced part (20) optionally loaded with a dispersed filler and removing the manufactured article from the mould,
wherein steps b) and c) can be performed in any chronological order.

2. Process according to claim 1, wherein step d) of providing at least one part of a fibre-reinforced composite material is performed by bringing an assembly comprising polyamide reinforcement fibres and material intended to constitute the matrix of said part to a higher temperature than the melting point of the matrix material but lower than the melting point of the fibres, using two different polyamides for fibres and matrix, or two different crystalline forms of the same polyamide having different melting points, or two polyamides of the same composition but with a different molecular weight.

3. Process according to claim 2, wherein for the production of the fibre-reinforced part two-component fibres are used with a "core-shell" configuration, in which the outer part of the fibre or "shell" is comprised of a polyamide having a lower melting point than the polyamide of the inner part or "core".

4. Process according to claim 2, wherein for the production of the fibre-reinforced part multi-filament "commingled yarn" fibres are used, wherein at least one filament is comprised of material having a higher melting point and at least one filament is comprised of the material having a lower melting point.

5. Process according to any one of the preceding claims, wherein said polyamides A, B and C are selected from PA6, PA6.6, PA4.6, PA6.10, PA6.12, PA11, PA12, polyphthalamide (PPA) and co-polyamides.

6. Process according to any one of the preceding claims, wherein for the production of the fibre-reinforced part polyamide PA6 or co-polyamide PA6/PA6.6 80-20 are used for the matrix and polyamide PA6.6 for the fibres.

7. Process according to any one of the preceding claims wherein, in the fibre-reinforced part, the reinforcement fibres are arranged in a single series of parallel fibres in a single direction, in two series of parallel fibres along at least two directions, in two series of parallel fibres along at least two directions and mutually interwoven with one another, or in the form of a fabric or a non-woven fabric.

8. Process according to any one of the preceding claims wherein, for the production of the non-fibre-reinforced part, polyamide is used loaded with fillers selected from glass or carbon fibres with a diameter in the range between 5 and 20 µm and length between 50 µm and 5 mm, mineral powders with particle size less than 50 µm, graphene and organic fillers, and wherein the quantity of the load varies between 15% and 40% of the weight of the non-fibre-reinforced part in the case of loads of carbon fibres, minerals or organic fillers, between 15% and 60% in the case of glass fibres, and less than 15% in the case of graphene.

9. Manufactured article according to the process of any one of the preceding claims, consisting of the coupling of at least two polyamide-based parts, one of which is comprised of a polyamide matrix optionally loaded with a filler dispersed in the matrix, and the other comprised of a polyamide matrix reinforced with fibres in their turn made of polyamide.

10. Manufactured article according to claim 9, wherein the fibre-reinforced part is comprised of a part reinforced with polyamide fibres coupled to a part reinforced with glass or carbon fibres, separate or in the form of fabric.

11. Manufactured article according to claim 10, wherein the matrix of the part reinforced with polyamide fibres and the part reinforced with glass or carbon fibres is made with the same polyamide.

## Patentansprüche

1. Verfahren zur Herstellung eines hergestellten Gegenstandes, das aus der Kopplung von mindestens zwei Teilen auf Polyamidbasis besteht, von denen eines aus einer Polyamidmatrix besteht, die gegebenenfalls mit einem in der Matrix dispergierten Füllstoff beladen ist, und das andere aus einer Polyamidmatrix besteht, die mit Fasern verstärkt ist, die ihrerseits aus Polyamid bestehen, umfassend die folgenden Schritte:
a) Anordnen mindestens eines Teils (21) eines faserverstärkten Verbundmaterials, das Fasern eines Polyamids A in einer Matrix eines Polyamids B oder Fasern und eine Matrix desselben Polyamids in zwei verschiedenen kristallinen Formen A und B oder Fasern (12) und eine Matrix desselben Polyamids in zwei Formen A und B mit verschiedenen Molekulargewichten umfasst, wobei das Polyamid A der Fasern einen höheren Schmelzpunkt als das Polyamid B der Matrix aufweist;
b) Anordnen des Teils (21) aus faserverstärktem Verbundmaterial im Inneren des Hohlraums einer Form, wobei der Hohlraum eine solche Form und/oder Größe hat, dass er nicht vollständig von dem Teil eingenommen wird;
c) Vorwärmen und gegebenenfalls Thermoformen des Teils aus faserverstärktem Verbundmaterial in der Form;
d) Einspritzen eines geschmolzenen Polyamids C, das gegebenenfalls mit einem dispergierten Füllstoff beladen ist, in den Raum des Hohlraums, der nicht von dem Teil des faserverstärkten Verbundmaterials eingenommen wird;
e) Erstarrenlassen des geschmolzenen Polyamids C, um ein nicht faserverstärktes Teil (20) zu bilden, das gegebenenfalls mit einem dispergierten Füllstoff beladen ist, und Entnahme des hergestellten Gegenstands aus der Form, wobei die Schritte b) und c) in beliebiger chronologischer Reihenfolge durchgeführt werden können.

2. Verfahren nach Anspruch 1, wobei der Schritt d) des Bereitstellens mindestens eines Teils aus einem faserverstärkten Verbundmaterials dadurch erfolgt, dass eine Einheit aus Polyamid-Verstärkungsfasern und einem Material, das dazu bestimmt ist, die Matrix des Teils zu bilden, auf eine Temperatur gebracht wird, die höher als der Schmelzpunkt des Matrixmaterials, aber niedriger als der Schmelzpunkt der Fasern ist, wobei zwei verschiedene Polyamide für die Fasern und die Matrix oder zwei verschiedene kristalline Formen desselben Polyamids mit unterschiedlichen Schmelzpunkten oder zwei Polyamide derselben Zusammensetzung, aber mit unterschiedlichem Molekulargewicht verwendet werden.

3. Verfahren nach Anspruch 2, wobei zur Herstellung des faserverstärkten Teils Zweikomponentenfasern mit einer "Kern-Schale"-Konfiguration verwendet werden, bei der der äußere Teil der Faser oder die "Schale" aus einem Polyamid besteht, das einen niedrigeren Schmelzpunkt hat als das Polyamid des inneren Teils oder des "Kerns".

4. Verfahren nach Anspruch 2, wobei zur Herstellung des faserverstärkten Teils Multifilament-"Mischgarn"-Fasern verwendet werden, wobei mindestens ein Filament aus einem Material mit einem höheren Schmelzpunkt und mindestens ein Filament aus einem Material mit einem niedrigeren Schmelzpunkt besteht.

5. Verfahren nach einem der vorstehenden Ansprüche, wobei die Polyamide A, B und C ausgewählt sind aus PA6, PA6.6, PA4.6, PA6.10, PA6.12, PA11, PA12, Polyphthalamid (PPA) und Co-Polyamiden.

6. Verfahren nach einem der vorstehenden Ansprüche, wobei zur Herstellung des faserverstärkten Teils Polyamid PA6 oder Co-Polyamid PA6/PA6.6 80-20 für die Matrix und Polyamid PA6.6 für die Fasern verwendet wird.

7. Verfahren nach einem der vorstehenden Ansprüche, wobei in dem faserverstärkten Teil die Verstärkungsfasern in einer einzigen Reihe paralleler Fasern in einer einzigen Richtung, in zwei Reihen paralleler Fasern in mindestens zwei Richtungen, in zwei Reihen paralleler Fasern in mindestens zwei Richtungen und miteinander verwoben oder in Form eines Gewebes oder eines Vlieses angeordnet sind.

8. Verfahren nach einem der vorstehenden Ansprüche, wobei zur Herstellung des nichtfaserverstärkten Teils Polyamid verwendet wird, das mit Füllstoffen beladen ist, die ausgewählt sind aus Glas- oder Kohlenstofffasern mit einem Durchmesser im Bereich zwischen 5 und 20 µm und einer Länge zwischen 50 µm und 5 mm, mineralischen Pulvern mit einer Teilchengröße von weniger als 50 µm, Graphen und organischen Füllstoffen, und wobei die Menge der Beladung im Fall von Beladungen mit Kohlenstofffasern, Mineralien oder organischen Füllstoffen zwischen 15 % und 40 % des Gewichts des nichtfaserverstärkten Teils, im Fall von Glasfasern zwischen 15 % und 60 % und im Fall von Graphen weniger als 15 % variiert.

9. Nach dem Verfahren nach einem der vorstehenden Ansprüche hergestellter Gegenstand, der aus der Kopplung von mindestens zwei Teilen auf Polyamidbasis besteht, von denen einer aus einer Polyamidmatrix besteht, die gegebenenfalls mit einem in der Matrix dispergierten Füllstoff beladen ist, und der andere aus einer Polyamidmatrix besteht, die mit Fasern verstärkt ist, die ihrerseits aus Polyamid bestehen.

10. Nach Anspruch 9 hergestellter Gegenstand, wobei der faserverstärkte Teil aus einem mit Polyamidfasern verstärkten Teil besteht, der mit einem mit Glas-oder Kohlenstofffasern verstärkten Teil gekoppelt ist, getrennt oder in Form eines Gewebes.

11. Nach Anspruch 10 hergestellter Gegenstand, wobei die Matrix des mit Polyamidfasern verstärkten Teils und des mit Glas- oder Kohlenstofffasern verstärkten Teils aus demselben Polyamid hergestellt ist.

## Revendications

1. Procédé de fabrication d'un article manufacturé consistant en l'accouplement d'au moins deux pièces à base de polyamide, l'une constituée d'une matrice en polyamide éventuellement chargée d'une charge dispersée dans la matrice, et l'autre constituée d'une matrice en polyamide renforcée par des fibres elles-mêmes en polyamide, comprenant les étapes suivantes :
a) arranger au moins une partie (21) d'un matériau composite renforcé par des fibres, comprenant des fibres d'un polyamide A dans une matrice d'un polyamide B, ou des fibres et une matrice du même polyamide sous deux formes cristallines différentes A et B, ou des fibres (12) et une matrice du même polyamide sous deux formes A et B avec des poids moléculaires différents, dans lequel le polyamide A des fibres a un point de fusion plus élevé que le polyamide B de la matrice ;
b) disposer ladite pièce (21) en matériau composite renforcé par des fibres à l'intérieur de la cavité d'un moule, ladite cavité ayant une forme et/ou une taille telle qu'elle n'est pas complètement occupée par ladite pièce ;
c) préchauffer et éventuellement thermoformer dans le moule ladite partie en matériau composite renforcé par des fibres ;
d) injecter un polyamide C fondu éventuellement chargé d'une charge dispersée dans l'espace de ladite cavité non occupé par ladite partie de matériau composite renforcé par des fibres ;
e) laisser le polyamide C fondu se solidifier pour former une pièce non renforcée par des fibres (20), éventuellement chargée d'une charge dispersée, et démouler l'article fabriqué,
dans lequel les étapes b) et c) peuvent être effectuées dans n'importe quel ordre chronologique.

2. Procédé selon la revendication 1, dans lequel l'étape d) de fourniture d'au moins une pièce en matériau composite renforcé par des fibres est réalisée en portant un ensemble comprenant des fibres de renfort en polyamide et un matériau destiné à constituer la matrice de ladite pièce à une température supérieure au point de fusion du matériau de la matrice mais inférieure au point de fusion des fibres, en utilisant deux polyamides différents pour les fibres et la matrice, ou deux formes cristallines différentes d'un même polyamide ayant des points de fusion différents, ou deux polyamides de même composition mais de poids moléculaire différent.

3. Procédé selon la revendication 2, dans lequel, pour la production de la pièce renforcée par des fibres, des fibres à deux composants avec une configuration « noyau-coquille » sont utilisées, dans laquelle la partie extérieure de la fibre ou « coquille » est constituée d'un polyamide ayant un point de fusion inférieur par rapport au polyamide de la partie intérieure ou « noyau ».

4. Procédé selon la revendication 2, dans lequel pour la production de la pièce renforcée par des fibres, des « fils mélangés » multi-filaments sont utilisés, dans lesquels au moins un filament est constitué d'un matériau ayant un point de fusion supérieur et au moins un filament est constitué d'un matériau ayant un point de fusion inférieur.

5. Procédé selon l'une quelconque des revendications précédentes, dans lequel lesdits polyamides A, B et C sont choisis parmi PA6, PA6.6, PA4.6, PA6.10, PA6.12, PA11, PA12, polyphthalamide (PPA) et co-polyamides.

6. Procédé selon l'une quelconque des revendications précédentes, dans lequel, pour la production de la pièce renforcée par des fibres, du polyamide PA6 ou du copolyamide PA6/PA6.6 80-20 pour la matrice et du polyamide PA6.6 pour les fibres sont utilisés.

7. Procédé selon l'une quelconque des revendications précédentes dans lequel, dans la partie renforcée par des fibres, les fibres de renforcement sont disposées en une seule série de fibres parallèles dans une seule direction, en deux séries de fibres parallèles selon au moins deux directions, en deux séries de fibres parallèles selon au moins deux directions et mutuellement entrelacées, ou sous la forme d'un tissu ou d'un tissu non-tissé.

8. Procédé selon l'une quelconque des revendications précédentes dans lequel, pour la fabrication de la pièce non renforcée par des fibres, du polyamide est utilisé chargé de charges choisies parmi des fibres de verre ou de carbone de diamètre compris entre 5 et 20 µm et de longueur comprise entre 50 µm et 5 mm, des poudres minérales de granulométrie inférieure à 50 µm, du graphène et des charges organiques, et dans lequel la quantité de la charge varie entre 15 % et 40 % du poids de la pièce non renforcée par des fibres dans le cas des charges de fibres de carbone, de minéraux ou de charges organiques, entre 15 % et 60 % dans le cas des fibres de verre, et moins de 15 % dans le cas du graphène.

9. Article manufacturé selon le procédé de l'une quelconque des revendications précédentes, consistant en l'accouplement d'au moins deux parties à base de polyamide, dont l'une est constituée d'une matrice de polyamide éventuellement chargée d'une charge dispersée dans la matrice, et l'autre constituée d'une matrice de polyamide renforcée par des fibres à leur tour constituées de polyamide.

10. Article manufacturé selon la revendication 9, dans lequel la partie renforcée par des fibres est constituée d'une partie renforcée par des fibres de polyamide couplée à une partie renforcée par des fibres de verre ou de carbone, séparées ou sous forme de tissu.

11. Article manufacturé selon la revendication 10, dans lequel la matrice de la partie renforcée par des fibres de polyamide et de la partie renforcée par des fibres de verre ou de carbone est réalisée avec le même polyamide.
